# EUROPEAN PATENT APPLICATION

(11) **EP 2 421 323 A1**
(43) Date of publication of application: **22.02.2012**
(21) Application number: 10785746.8
(22) Date of filing: 08.06.2010
(51) Int. Cl.: H04W 76/02, H04W 92/20

(54) **METHOD, DEVICE AND SYSTEM FOR ESTABLISHING SWITCH LINK**

(30) Priority: 12.06.2009 CN 200910086975
(71) Applicant: Huawei Technologies Co., Ltd., Shenzhen, Guangdong 518129 (CN)
(72) Inventor: CHEN, Hao, Shenzhen Guangdong 518129 (CN)
(74) Representative: Pfenning, Meinig & Partner GbR
(86) International application number: PCT/CN2010/073677
(87) International publication number: WO 2010/142233

(57) **Abstract**

Embodiments of the present invention provide a method, an apparatus, and a system for establishing a switch link. The method for establishing a switch link includes: sending a query request message used to query address information of a target Evolved NodeB (eNB) to a network side when no switch link exists between a source eNB and the target eNB; receiving a query response message that includes the address information of the target eNB and is returned by the network side; and sending a link establishment request message according to the query response message that includes the address information of the target eNB, and establishing a switch link. The embodiments of the present invention further provide an apparatus and a system for establishing a switch link. According to the method, the apparatus, and the system for establishing a switch link that are provided in the embodiments of the present invention, when no switch link exists between the source eNB and the target eNB reported by a terminal, the query request message is sent to the network side to obtain the address information of the target eNB, so as to establish a switch link. Therefore, the switch link can be established in the case that an advanced planning does not exist.

## Description

This application claims priority to Chinese Patent Application No. 200910086975.X, filed with the Chinese Patent Office on June 12, 2009 and entitled "METHOD, APPARATUS, AND SYSTEM FOR ESTABLISHING SWITCH LINK", which is incorporated herein by reference in its entirety.

### FIELD OF THE INVENTION

The present invention relates to the field of communications technologies, and in particular, to a method, an apparatus, and a system for establishing a switch link.

### BACKGROUND OF THE INVENTION

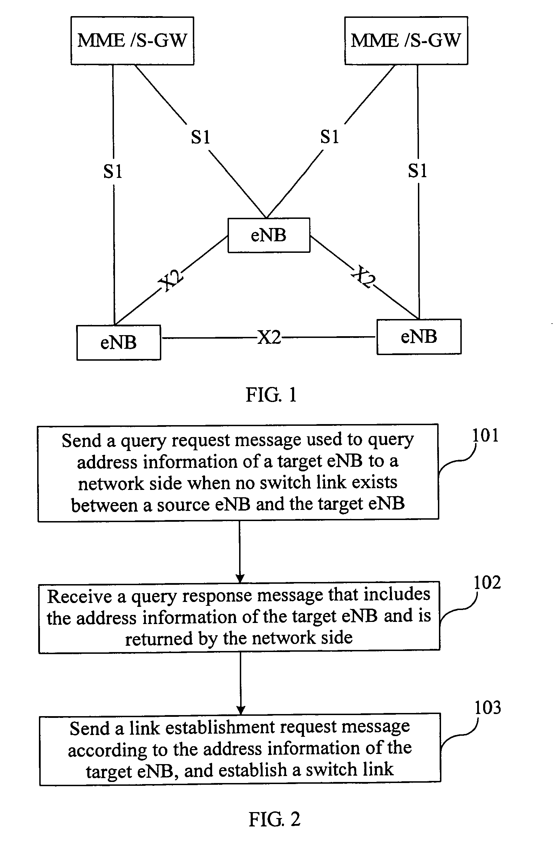

FIG 1 is a network architecture diagram of a Long Term Evolution (hereinafter referred to as LTE) network in the prior art. As shown in FIG 1, the network architecture mainly includes an Evolved NodeB (eNB) and a Mobility Management Entity (hereinafter referred to as MME)/Serving Gateway (hereinafter referred to as S-GW). The eNB is connected to the MME/S-GW through an S1 interface. An X2 link (a switch link between adjacent eNBs) is mainly responsible for data transmission of a control plane and a user plane during User Equipment (UE) handover, and is further responsible for information interactions in functions such as Inter-cell Interference Co-ordination (hereinafter referred to as ICIC) and Load Balancing. In the LTE network, a network management architecture is divided into three layers including a network element layer, an Network Element Management (hereinafter referred to as NEM), and a Network Management System (hereinafter referred to as NMS), where the NEM layer is customized by a manufacturer, and the NMS layer is a uniform network management of an operator.

In the technical solutions of the prior art, adjacent cells and adjacent eNBs are planned in advance, that is, switch link data between adjacent eNBs is pre-configured, and then sent to each eNB. A switch link is directly established between the adjacent eNBs according to the configured data after the eNBs are powered on.

In the implementation of the present invention, the inventor finds that the prior art at least has the following problems: If a terminal that belongs to a cell A finds an adjacent cell B, a switch link between the cell A and the cell B cannot be established in the case that there is no plan between the cell A and the cell B in advance. In summary, the switch link cannot be established between cells that are not planned in advance through a method for establishing a switch link in the prior art.

### SUMMARY OF THE INVENTION

Embodiments of the present invention provide a method, an apparatus, and a system for establishing a switch link, so as to establish a switch link between cells that are not planned in advance.

In order to achieve the foregoing objectives, an embodiment of the present invention provides a method for establishing a switch link, where the method includes:
sending a query request message used to query address information of a target eNB to a network side when no switch link exists between a source eNB and the target eNB;
receiving a query response message that includes the address information of the target eNB and is returned by the network side; and
sending a link establishment request message according to the address information of the target eNB, and establishing a switch link.

An embodiment of the present invention further provides an apparatus for establishing a switch link, where the apparatus includes:
a first sending module, configured to send a query request message used to query address information of a target eNB to a network side when no switch link exists between a source eNB and the target eNB;
a receiving module, configured to receive a query response message that includes the address information of the target eNB and is returned by the network side; and
a second sending module, configured to initiate a link establishment request message according to the address information of the target eNB, and establish a switch link.

An embodiment of the present invention further provides a system for establishing a switch link, where the system includes an eNB, a NEM, and an NMS. The eNB is configured to send a query request message used to query address information of a target eNB to the NEM when no switch link exists between the eNB and the target eNB; receive a query response message that includes the address information of the target eNB and is returned by the NEM; and initiate a switch link establishment request message according to the query response message that includes the address information of the target eNB, and establish a switch link.

The NEM is configured to receive the query request message that is used to query the address information of the target eNB and sent from the eNB, and return the query response message that includes the address information of the target eNB.

In the method, the apparatus, and the system for establishing a switch link according to the embodiments of the present invention, after determining that no switch link exists between the source eNB and the target eNB reported by a terminal, the source eNB sends the query request message used to query the address information of the target eNB to the network side, sends the link establishment request message after obtaining the address information, and establishes the switch link.

### BRIEF DESCRIPTION OF THE DRAWINGS

FIG. 1 is a schematic network architecture diagram of an LTE network in the prior art;
FIG 2 is a schematic flow chart of a first embodiment of a method for establishing a switch link according to the present invention;
FIG 3 is a schematic structural diagram of a second embodiment of an apparatus for establishing a switch link according to the present invention;
FIG 4 is a schematic structural diagram of a first sending module according to an embodiment of the present invention;
FIG 5 is a schematic structural diagram of a first embodiment of a system for establishing a switch link according to the present invention;
FIG 6 is a schematic structural diagram of a second embodiment of a system for establishing a switch link according to the present invention; and
FIG 7 is a schematic flow chart of a specific embodiment according to the present invention.

### DETAILED DESCRIPTION OF THE EMBODIMENTS

The technical solutions of the present invention are further described in detail below through the accompanying drawings and embodiments.

The embodiments of the present invention provide a method, an apparatus, and a system for establishing a switch link between eNBs. FIG 2 is a schematic flow chart of a first embodiment of a method for establishing a switch link according to the present invention. As shown in FIG 2, the method includes the following steps.

Step 101: Send a query request message used to query address information of a target eNB to a network side when no switch link exists between a source eNB and the target eNB.

Step 102: Receive a query response message that includes the address information of the target eNB and is returned by the network side.

Step 103: Send a link establishment request message according to the address information of the target eNB, and establish a switch link.

In this embodiment, the source eNB sends the query request message used to query the address information of the target eNB to the network side, and queries the address information of the target eNB, so as to establish a switch link between cells without planning, that is, establish a switch link between the source eNB and the target eNB, where the source eNB and the target eNB have no switch link.

In the foregoing step 101, a terminal detects an adjacent cell, and reports Global Cell Identification (GCI) information of the adjacent cell to an eNB, that is, the source eNB; and the source eNB obtains an eNB Identifier (ID) from the GCI information, queries in a database whether a switch link between the source eNB and an eNB (the target eNB) corresponding to the eNB ID is established, and sends the query request message used to query the address information of the target eNB to a NEM if the switch link is not found.

In the foregoing step 102, after receiving the query request message, the NEM queries the address information of the target eNB in the database, and sends the foregoing address information to the eNB that initiates the query when the corresponding address information is found. If the corresponding address information does not exist in the NEM, the address information needs to be queried in an NMS, and specific steps are: forwarding, by the NEM, the query request message to the NMS; querying, by the NMS, the address information of the target eNB, and then sending the address information of the target eNB to the NEM; and forwarding, by the NEM, the address information of the target eNB to the source eNB.

In the method for establishing a switch link according to the foregoing embodiment, the terminal automatically finds the adjacent cell according to an Automatic Neighbour Relationship (hereinafter referred to as ANR), and sends the GCI of the cell to the source eNB; the source eNB sends the query request message used to query the address information to the NEM when the switch link between the source eNB and the target eNB corresponding to the adjacent cell is not found; after the address information of the target eNB is queried and found, the NEM or the NMS returns the queried and found address information of the target eNB to the source eNB; and the source eNB sends the link establishment request message, and establishes the switch link.

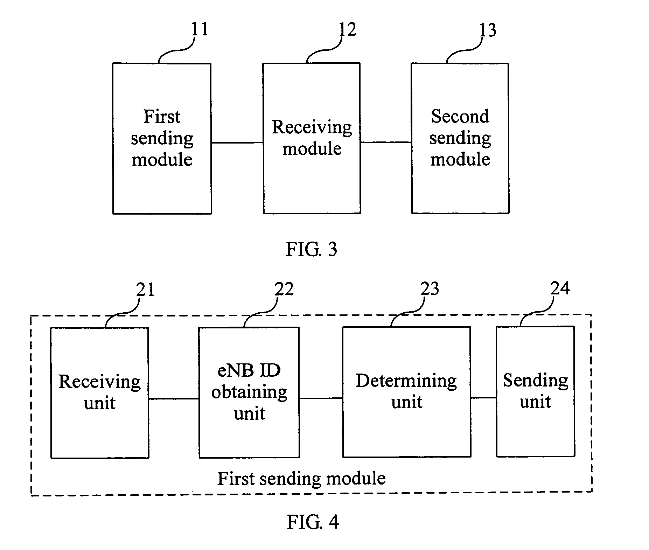

FIG. 3 is a schematic structural diagram of a second embodiment of an apparatus for establishing a switch link according to the present invention. As shown in FIG 3, the apparatus includes a first sending module 11, a receiving module 12, and a second sending module 13. The first sending module 11 is configured to send a query request message used to query address information of a target eNB to a network side when no switch link exists between a source eNB and the target eNB. The receiving module 12 is configured to receive a query response message that includes the address information of the target eNB and is returned by the network side. The second sending module 13 is configured to initiate a link establishment request message according to the query response message that includes the address information of the target eNB, and establish a switch link.

In this embodiment, the first sending module sends the query request message to the network side to query the address information of the target eNB after determining that no switch link exists between the source eNB and the target eNB reported by a terminal, and then after the receiving module receives the address information of the target eNB, the second sending module initiates the link establishment request and establishes the switch link. The apparatus for establishing a switch link according to this embodiment can realize the establishment of the switch link even in the case that an advanced planning does not exist.

FIG 4 is a schematic structural diagram of the first sending module according to an embodiment of the present invention. As shown in FIG 4, the first sending module may further include a receiving unit 21, an eNB ID obtaining unit 22, a determining unit 23, and a sending unit 24. The receiving unit 21 is configured to receive a notification message that includes GCI information and is sent by a terminal when the terminal detects an adjacent cell. The eNB ID obtaining unit 22 is configured to obtain, according to the GCI information, an eNB ID of an eNB corresponding to the cell. The determining unit 23 is configured to determine, according to the eNB ID, whether a switch link exists between a source eNB and the target eNB. The sending unit 24 is configured to send a query request message used to query address information of the target eNB reported by the terminal when it is determined that no switch link exists between the source eNB and the target eNB.

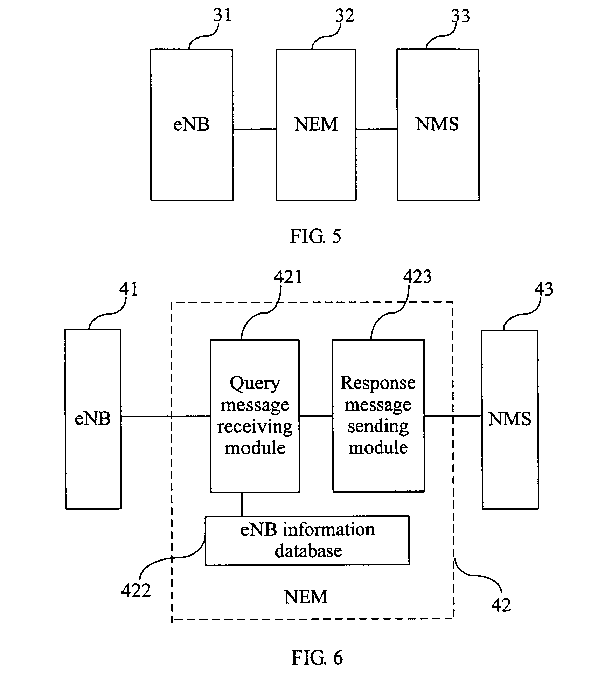

FIG 5 is a schematic structural diagram of a first embodiment of a system for establishing a switch link according to the present invention. As shown in FIG 5, the system includes an eNB 31, a NEM 32, and an NMS 33. The eNB 31 is configured to send a query request message used to query address information of a target eNB to the NEM when no switch link exists between the eNB and the target eNB; receive a query response message that includes the address information of the target eNB and is returned by the NEM 32; and initiate a switch link establishment request message according to the query response message that includes the address information of the target eNB, and establish a switch link. The NEM 32 is configured to receive the query request message that is used to query the address information of the target eNB reported by a terminal and sent by the eNB, and return the query response message that includes the address information of the target eNB.

In this embodiment, the eNB 31 is the source eNB where the terminal is located, and after it is determined that no switch link exists between the eNB and the target eNB that corresponds to the adjacent cell reported by the terminal, the source eNB queries the address information of the target eNB through sending the query request message, and after receiving the query response message from the target eNB, sends the link establishment request message according to the address information included in the received query response message, and establishes the switch link between the source eNB and the target eNB.

In the system for establishing a switch link, the address information of the eNB may exist in the NEM or the NMS. FIG 6 is a schematic structural diagram of a second embodiment of a system for establishing a switch link according to the present invention. As shown in FIG 6, the system includes an eNB 41, a NEM 42, and an NMS 43. The eNB is configured to send a query request message used to query address information of a target eNB to the NEM when no switch link exists between the eNB and the target eNB; receive a query response message that includes the address information of the target eNB and is returned by the NEM; and initiate a switch link establishment request message according to the query response message that includes the address information of the target eNB.

The NEM 42 may further include a query message receiving module 421, an eNB information database 422, and a response message sending module 423. The query message receiving module 421 is configured to receive the query request message that is used to query the address information of the target eNB and sent from the eNB. The eNB information database 422 is configured to store the address information of the target eNB. The response message sending module 423 is configured to send the query response message after the address information of the target eNB is queried and found.

In this embodiment, the eNB information database of the NEM stores the address information of the eNB, the address information of the target eNB may be queried in the database, and the query response message is returned, so that the source eNB may send the query request message to the NEM to query the address information of the target eNB, and establish the switch link even in the case that an advanced planning does not exist.

In the embodiment, if the address information of the target eNB requested to be queried does not exist in the eNB information database, a message forwarding module may be set in an eNB manager. The message forwarding module forwards the query request message to the NMS in the case that the address information of the target eNB does not exist in the eNB information database, and after receiving the query response message that includes the address information of the target eNB and is sent by the NMS, forwards the received query response message to the source eNB. The address information of the eNB is stored in the NMS.

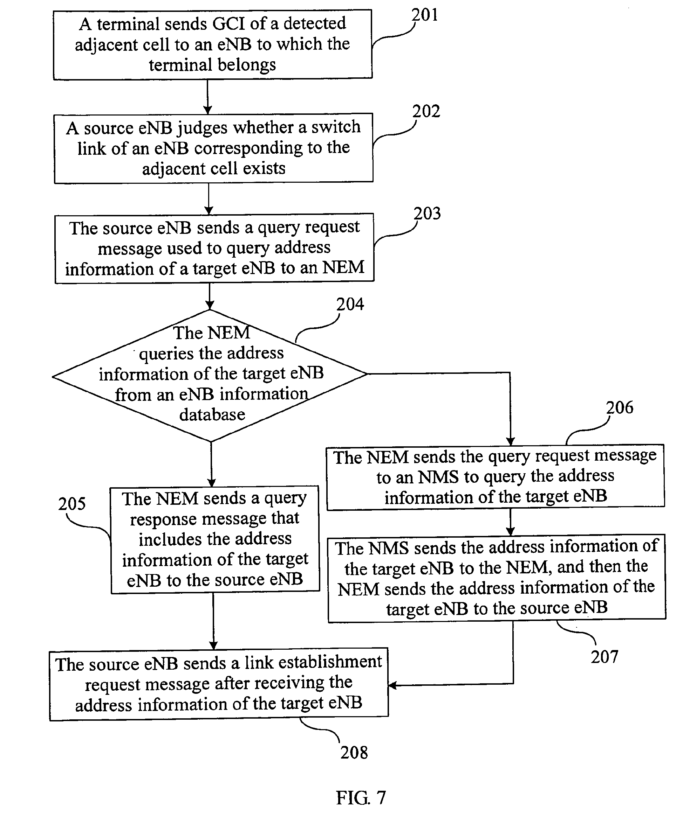

FIG 7 is a schematic flow chart of a specific embodiment according to the present invention. As shown in FIG 7, the following steps are included.

Step 201: A terminal detects an adjacent cell through ANR, and sends GCI of the adjacent cell to an eNB (source eNB) to which the terminal belongs.

Step 202: The source eNB obtains from the GCI an eNB ID, for example, eNBID 1 of an eNB (target eNB) corresponding to the adjacent cell, and judges whether a switch link of the target eNB exists. A switch link between the two eNBs is needed if the switch link of the target eNB does not exist; and therefore, step 203 is further performed.

Step 203: The source eNB sends a query request message used to query address information of the target eNB to a NEM through a southbound interface (Itf-S), where the query request message may include an eNB ID of the target eNB, and the address information of the target eNB may be an IP address of the target eNB, or other identification information.

Step 204: The NEM queries the address information of the target eNB (eNBID1) in an eNB information database according to the eNB ID of the target eNB, and step 205 is performed when the address information is queried and found, or step 206 is performed when the address information is not queried and found.

Step 205: The NEM sends a query response message that includes the address information to the source eNB, and then step 208 is performed.

Step 206: The NEM sends the query request message to query the address information of the target eNB to the NMS through a northbound interface (Itf-N) when the address information of the target eNB is not queried and found.

Step 207: After the address information of the target eNB is queried and found, the NMS sends the queried and found address information of the target eNB to the NEM, and then the NEM sends the address information of the target eNB to the source eNB.

Step 208: The source eNB sends a link establishment request message after receiving the address information of the target eNB, and establishes a switch link between the source eNB and the target eNB.

In this embodiment, the NEM is a network management system specific to a manufacturer, and the NMS is a network management system of an operator.

In this embodiment, after the terminal detects the adjacent cell, the source eNB queries whether the switch link between the source eNB and the target eNB corresponding to the adjacent cell is established, and if the switch link is not established, the source eNB sends the query request message used to query the address information of the target eNB, queries the address information of the target eNB from the NEM or the NMS, sends the link establishment request message after the address information of the target eNB is obtained, and establishes the switch link. The method for establishing a switch link according to the embodiment of the present invention can realize the establishment of the switch link between the source eNB and the target eNB in the case that an advanced planning does not exist.

Finally, it should be noted that the preceding embodiments are merely used to describe the technical solutions of the present invention, but not intended to limit the technical solutions of the present invention. Although the present invention is described in detail with reference to the exemplary embodiments, it should be understood by persons of ordinary skill in the art that, modifications or equivalent replacements may still be made to the technical solutions of the present invention, however, these modifications or equivalent replacements cannot make the modified technical solutions depart from the spirit and scope of the present invention.

## Claims

1. A method for establishing a switch link, comprising:
sending a query request message used to query address information of a target Evolved NodeB, eNB, to a network side when no switch link exists between a source eNB and the target eNB;
receiving a query response message that includes the address information of the target eNB and is returned by the network side; and
sending a link establishment request message according to the address information of the target eNB, and establishing a switch link between the source eNB and the target eNB.

2. The method for establishing a switch link according to claim 1, wherein before the sending the query request message used to query the address information of the target eNB to the network side when no switch link exists between the source eNB and the target eNB reported by a terminal, the method further comprises:
receiving a notification message that includes Global Cell Identification, GCI, information of an adjacent cell and is sent by the terminal after the terminal detects the adjacent cell;
obtaining, according to the GCI information, an eNB Identifier, ID, of the target eNB corresponding to the adjacent cell; and
determining, according to the eNB ID of the target eNB, whether a switch link exists between the source eNB and the target eNB reported by the terminal.

3. The method for establishing a switch link according to claim 2, wherein the receiving the query response message that includes the address information of the target eNB and is returned by the network side comprises: querying, by a Network Element Management, NEM, the address information of the target eNB from a preset database according to the eNB ID; and
receiving the query response message that includes the address information of the target eNB and is returned by the NEM.

4. The method for establishing a switch link according to claim 2, wherein
the receiving the query response message that includes the address information of the target eNB and is returned by the network side comprises: querying, by a NEM, the address information of the target eNB from a preset database according to the eNB ID; sending the query request message to a Network Management System, NMS, if the address information of the target eNB is not queried; and returning, by the NMS, the query response message that includes the address information of the target eNB via the NEM; and
receiving the query response message that includes the address information of the target eNB and is returned by the NMS via the NEM.

5. The method for establishing a switch link according to claim 1, wherein the sending the query request message used to query the address information of the target eNB to the network side comprises: sending the query request message used to query the address information of the target eNB to a NEM; and
the receiving the query response message that includes the address information of the target eNB and is returned by the network side comprises: receiving the query response message that includes the address information of the target eNB and is returned by the NEM.

6. The method for establishing a switch link according to claim 5, wherein the sending the query request message used to query the address information of the target eNB to the NEM comprises: if the NEM does not query and find the address information of the target eNB, forwarding, by the NEM, the query request message to the NMS, and sending, by the NMS, the queried and found address information of the target eNB to the NEM.

7. The method for establishing a switch link according to claim 6, wherein the query request message used to query the address information of the target eNB is sent to the NEM through a southbound interface; and if the NEM does not query and find the address information of the target eNB, the NEM forwards the query request message to the NMS through a northbound interface, and the NMS sends the queried and found address information of the target eNB to the NEM.

8. The method for establishing a switch link according to any one of claims 1 to 7, wherein the address information of the target eNB comprises an Internet Protocol, IP, address of the target eNB.

9. An apparatus for establishing a switch link, comprising:
a first sending module, configured to send a query request message used to query address information of a target Evolved NodeB, eNB, to a network side when no switch link exists between a source eNB and the target eNB;
a receiving module, configured to receive a query response message that includes the address information of the target eNB and is returned by the network side; and
a second sending module, configured to send a link establishment request message according to the address information of the target eNB, and establish a switch link between the source eNB and the target eNB.

10. The apparatus for establishing a switch link according to claim 9, wherein the first sending module comprises:
a receiving unit, configured to receive a notification message that includes Global Cell Identification, GCI, information and is sent by a terminal after the terminal detects an adjacent cell;
an eNB Identifier, ID, obtaining unit, configured to obtain an eNB ID of the adjacent cell according to the GCI information;
a determining unit, configured to determine, according to the eNB ID, whether a switch link exists between the source eNB and the target eNB; and
a sending unit, configured to send a link establishment request message when it is determined that no switch link exists between the source eNB and the target eNB.

11. A system for establishing a switch link, comprising an Evolved NodeB, eNB, and a Network Element Management, NEM, wherein the eNB is configured to send a query request message used to query address information of a target eNB to the NEM when no switch link exists between the eNB and the target eNB; receive a query response message that includes the address information of the target eNB and is returned by the NEM; and send a switch link establishment request message according to the query response message that includes the address information of the target eNB, and establish a switch link between the eNB and the target eNB; and
the NEM is configured to receive the query request message that is used to query the address information of the target eNB and sent by the eNB, and return the query response message that includes the address information of the target eNB.

12. The system for establishing a switch link according to claim 11, wherein the NEM comprises:
a query message receiving module, configured to receive the query request message that is used to query the address information of the target eNB and sent by the eNB;
an eNB information database, configured to store the address information of the eNB; and
a response message sending module, configured to send the query response request message after the address information of the target eNB is queried and found.

13. The system for establishing a switch link according to claim 11, wherein the NEM further comprises:
a message forwarding module, configured to forward the query request message to a Network Management System, NMS, after the address information of the target eNB does not exist in an eNB information database, and after receiving the query response message that includes the address information of the target eNB and is sent by the NMS, forward the received query response message to the eNB;
wherein the NMS is configured to store the address information of the eNB.

14. The system for establishing a switch link according to claim 11, further comprising the NMS, wherein the NMS comprises:
a storage module, configured to store the address information of the target eNB;
a receiving module, configured to receive the query request message forwarded by the NEM;
a searching module, configured to search the address information of the target eNB according to the query request message received by the receiving module; and
a sending module, configured to send the query response message that includes the address information of the target eNB to the NEM, wherein the address information of the target eNB is searched and found by the searching module.

15. A system for establishing a switch link, comprising an Evolved NodeB, eNB, and a network side device, wherein the eNB is configured to send a query request message used to query address information of a target eNB to the network side device when no switch link exists between the eNB and the target eNB; receive a query response message that includes the address information of the target eNB and is returned by the network side device; and send a switch link establishment request message according to the query response message that includes the address information of the target eNB, and establish a switch link between the eNB and the target eNB; and
the network side device is configured to receive the query request message that is used to query the address information of the target eNB and sent by the eNB, and return the query response message that includes the address information of the target eNB.
